(19) Europäisches Patentamt
European Patent Office
Office européen des brevets

(11) EP 0 736 590 A2

(12) **EUROPEAN PATENT APPLICATION**

(43) Date of publication:
**09.10.1996 Bulletin 1996/41**

(51) Int Cl.$^6$: **C10L 1/22**, C07C 233/05, C07C 233/18

(21) Application number: **96201711.7**

(22) Date of filing: **21.09.1993**

(84) Designated Contracting States:
**AT DE FR GB IT NL SE**

(30) Priority: **22.09.1992 GB 9219962**

(62) Application number of earlier application in accordance with Art. 76 EPC: **93920793.2**

(71) Applicant: **EXXON CHEMICAL PATENTS INC.**
**Linden New Jersey 07036 (US)**

(72) Inventors:
- **Caprotti, Rinaldo**
  **Oxfordshire, OX12 0HQ (GB)**
- **Smith, Anthony Kitson**
  **Reading, Berkshire RG5 3BH (GB)**

(74) Representative: **Hart, Richard Joseph et al**
**Exxon Chemical Limited,**
**Exxon Chemical Technology Centre,**
**P.O. Box 1,**
**Milton Hill**
**Abingdon, Oxfordshire OX13 6BB (GB)**

Remarks:
This application was filed on 21 - 06 - 1996 as a divisional application to the application mentioned under INID code 62.

(54) **Additives for organic liquids**

(57) Certain additives have proved effective in suppressing or inhibiting the foaming tendencies of organic liquids, particularly petroleum fuels.

EP 0 736 590 A2

## Description

This application is a divisional of European Patent Application No. 93920793.2 filed on 21st September 1993.

This invention concerns additives useful as suppressors or inhibitors of the foaming tendencies of organic liquids.

The foaming tendency of an organic liquid can be a major constraint to industrial usefulness. Foaming may render a liquid unsuitable as a solvent or diluent for chemical processes involving agitation. Foaming can further interfere with the pumping efficiency of such liquids, and the resulting foam may obscure the dials of flow gauges, making accurate measures of volume difficult.

The problem of foaming is particularly important in the distribution of organic liquids such as liquid petroleum products, especially fuels and lubricants. Such liquids typically pass through a distribution network, involving pumping through pipelines, or a series of storage tanks. In such distribution systems, foaming can substantially increase the pumping times of large quantities of liquid. In addition, severe foaming can lead to the overflow of excessive foam from tanks during filling, resulting in wastage and the hazard of spilt liquid.

The problem of foaming of organic liquids has been addressed by the use of additives which impart a reduced foaming tendency to the liquids in question. Such additives are known in the art, examples being organo-silicon copolymers, or derivatives of such polymers. Examples of these are the siloxane-polyoxyalkylene block copolymers described in United States Patent No 3,233,986, which consist of one or more siloxane blocks attached to one or more oxyalkylene blocks, a major proportion of which is composed of oxyethylene and/or oxypropylene groups. Such organo-silicon polymers have proved effective in reducing the foaming tendencies of a variety of organic liquids. Other classes of organo-silicon polymers, including fluorinated derivatives are also known, and have been used for their foam-reducing properties.

However, in certain organic liquids, the use of such organo-silicon materials as additives to suppress or inhibit foaming has created problems. In particular, their application to organic liquids subject to subsequent combustion leads to the concommitant combustion of the organo-silicon polymer, resulting in the production of silicon oxides such as silicon dioxide. Silicon oxides generated by combustion take the form of finely-divided solid matter, and thus contribute to the quantity of particulate matter emitted from the combustion zone. This contribution to the emitted particulate matter is of particular concern in applications under legislative pressure to reduce emission levels, especially particulate emissions. In particular, the combustion of petroleum products, especially of fuels and lubricants, is under increasing legislative scrutiny.

In addition, particles of silicon oxides may, by poisoning the catalyst surface, interfere with the action of catalyst systems employed to reduce the emissions of particulate and other products of incomplete combustion. The effectiveness of particulate traps, which function by filtering out particulate matter may also be reduced, the silicon oxide particles plugging the fine pores through which exhaust gases pass.

Thus there exists a need for materials, useful as suppressors or inhibitors of the foaming tendencies of organic liquids, which do not give rise to silicon oxides upon combustion. Further, there exists a need for said materials to be capable of combustion to gaseous products, such that their contribution to the quantity of particulate matter generated by combustion will be negligible.

It has now surprisingly been found that certain known and novel ashless additives, being obtainable by the reaction between

(a) a certain polyamine possessing at least one primary or secondary amino-group, and

(b) a carboxylic acylating agent

are effective in suppressing or inhibiting the foaming tendencies of organic liquids.

Compositions corresponding to the above reaction products have been described in the art. Such compositions include the automotive fuel dispersants described in UK Patent No 1,124,611 being the products of reaction between a polyalkylene polyamine and a hydrocarbyl-substituted succinic acid (or functional derivative thereof), having as a substituent a substantially aliphatic hydrocarbon group containing 30-200 carbon atoms. The hydrocarbyl substituent is preferably derived from a $C_2$-$C_5$ olefin polymer. UK 1,124,611 further describes the constitution of the reaction product as complex, being a likely mixture of amide, diamide and imide products. Hydrocarbyl-substituted succinamide and succinimide fuel dispersants are further described in numerous references, for example EP-A-147,240.

EP-A-240,255 describes anti-fouling agents suitable for use in gasoline fuels, said agents having the formula

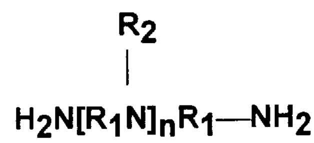

wherein $R_1$ is $C_2$-$C_4$,

$R_2$ is hydrogen or

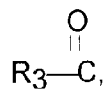

$R_3$ is hydrogen, alkyl, aryl, alkaryl or aralkyl; and
n is an integer of 1 to 5.

These anti-fouling agents are described to be particularly effective in controlling deposit build-up in fuel injection systems.

US Patent No 3,772,359 describes polyamides of a polyalkylene polyamine and an iso-fatty acid or mixture of an iso-fatty acid and a straight-chain fatty acid. The polyamides are further reacted with a mixture of an aldehyde and an alkyl hydroxy aromatic compound to form a product useful as a lubricant additive. For such polyamides to form a suitable starting material for this further reaction, they require at least one free basic nitrogen atom, i.e. a nitrogen possessing a replaceable hydrogen atom.

US Patent No 4,394,135 describes products of reaction between phenylstearic acid or isostearic acid and a polyamine of the formula

$$NH_2\text{-}(C_nH_{2n}NH)_x\text{-}C_nH_{2n}\text{-}NH_2$$

wherein n is from 2 to 4 and x is 1 to 9. The polyamine reactant is employed in an amount sufficient to give a product in which every basic nitrogen atom has been acylated. Such reaction products are further said to impart improved detergency to liquid hydrocarbon fuels.

FR-A-1,584,938 describes amides containing at least one unreacted amino group, obtained by the reaction of di, tri and polyamines with higher carboxylic acids. Such products are useful during the refining of petroleum fractions, aiding the separation of water present initially as residual water haze.

US Patent No 3,502,713 describes surface active compounds having low foaming tendencies, being the reaction products of an aromatic carboxylic acid with a dibasic acid and a diacylatable material. Such compounds are described as effective in a variety of aqueous systems.

US Patent No 3,259,586 describes derivatives of N-substituted polyalkylene polyamines, useful as foam inhibitors in a variety of media, including mineral oil. The N-substituted nature of the polyamine is said to impart unusual properties to its derivatives, which include acylates. However, such polyamines are derived from unsubstituted polyalkylene polyamines via a multi-step reaction pathway, placing economic constraints on their industrial application. There exists a continuing need for compositions which inhibit foams in organic media and are more cost effective to produce industrially.

In a first aspect, this invention provides the fully-acylated product of reaction between

(a) a polyamine of the formula (III)

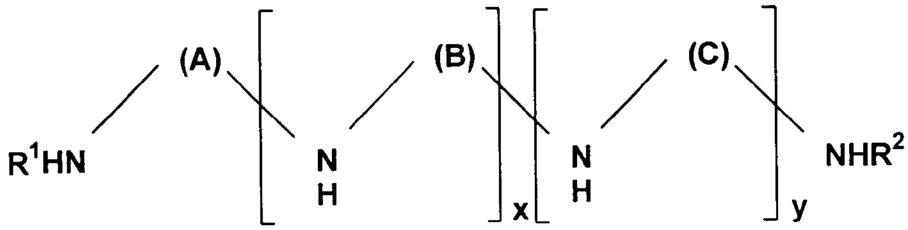

(III)

wherein A, B and C are the same or different and each represents a hydrocarbyl group, and x and y are integers whose sum is in the range from 0 to 10, and wherein $R^1$ and $R^2$ may be the same or different and each represents hydrogen or a hydrocarbyl group, provided that both $R^1$ and $R^2$ are not hydrogen, and

(b) a monocarboxylic acylating agent of the formula (II)

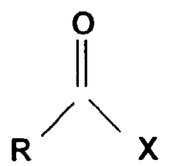

(II)

wherein R represents a hydrocarbyl group and X represents a leaving group.

In a second aspect, the invention provides a liquid composition comprising a major proportion of an organic liquid, and a minor proportion of an additive comprising the fully-acylated product of reaction of the first aspect of the invention.

In a third aspect, the invention provides the use, for suppression or inhibition of the foaming tendencies of an organic liquid, of the fully-acylated product of the first aspect of the invention.

As used in this specification the term "hydrocarbyl" refers to a group having a carbon atom directly attached to the rest of the molecule and having a hydrocarbon or predominantly hydrocarbon character. Among these, there may be mentioned hydrocarbon groups, including aliphatic (e.g. alkyl or alkenyl), alicyclic (e.g. cycloalkyl or cycloalkenyl), aromatic, aliphatic and alicyclic-substituted aromatic, and aromatic-substituted aliphatic and alicyclic groups. Aliphatic groups are advantageously saturated. Unsubstituted hydrocarbyl groups are preferred; however, if desired such groups may carry further hydrocarbyl groups as substituents. Such groups may also contain non-hydrocarbon substituents provided their presence does not alter the predominantly hydrocarbon character of the group, examples include keto, halo, hydroxy, nitro, cyano, alkoxy and hydroxyalkyl. If the hydrocarbyl group is substituted, a single (mono) substituent is preferred. Examples of substituted hydrocarbyl groups include 2-hydroxyethyl, 3-hydroxypropyl, 4-hydroxybutyl, 2-ketopropyl, ethoxyethyl, and propoxypropyl. The groups may also or alternatively contain atoms other than carbon in a chain or ring otherwise composed of carbon atoms. Suitable hetero atoms include, for example, nitrogen, sulfur, and, preferably oxygen. Advantageously, each hydrocarbyl group contains at most 10, preferably at most 8, more preferably at most 6 and most preferably at most 4, carbon atoms.

The carboxylic acylating agents useful as reactant (b) according to the first aspect contain one carboxylic acylating group, and a hydrocarbyl group sufficient to impart hydrocarbon solubility to the molecule. Suitable carboxylic acylating groups include carboxylic acid groups and derivatives thereof possessing a leaving group, i.e. a group capable of being displaced during reaction. Examples of such carboxylic derivatives include esters, anhydrides and acyl halides including acyl chlorides, acyl bromides and acyl iodides, although other carboxylic derivatives known in the art as acylating agents may be used to equal effect.

These monocarboxylic acylating agents are of the formula (II):

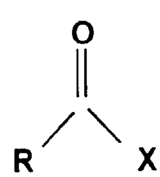

where R represents a hydrocarbyl group, and where X represents a leaving group. Such preferred agents include fatty acid compositions, such as naturally-occurring fatty acids and derivatives of same. Preferably, such fatty acids or derivatives contain from 8 to 40, more preferably 10 to 30, even more preferably 12 to 24, and most preferably 12 to 18 carbon atoms. In such fatty acid compositions, R is preferably straight or branched-chain alkyl or alkenyl, and most preferred straight chain alkyl. Most preferred fatty acids include those selected from the group comprising lauric, myristic, palmitic, stearic, oleic and elaidic acids, stearic and oleic acids being most preferred.

The preferred fatty acid compositions useful in this invention may also comprise mixtures of fatty acids, having average carbon number within the preferred ranges hereinbefore described. Such specifically-preferred mixtures include mixtures of the above fatty acids, and naturally-originating mixtures such as coco-fatty acid fraction and cekanoic acid (a mixture of iso-$C_{13}$ fatty acids). Mixtures of naturally-originating fatty acids with the other fatty acids described above are also preferred.

The products according to this invention may be of mixed composition, where the polyamine selected as (a) contains more than one primary or secondary amino-group. Thus, the product may comprise a mixture of simple amides, di- and higher poly-amides, imides and/or amidine reaction products where the nature of reactants (a) and (b) and the ratio in which they are combined permits such reactions to take place. Their definition in terms of reaction products thus describes most conveniently the range of possible compositions obtained in accordance with the use of this invention.

Reaction conditions suitable for generating the above reaction products are for example known in the art for promoting the acylation of polyamines. Thus, the reaction may be carried out by mixing the reactants (a) and (b), optionally in the presence of a mutual co-solvent, and heating the mixture sufficiently to cause reaction to occur, without raising the temperature above the decomposition temperature of the reactants or product. Alternatively, reactant (a) may be heated to reaction temperature and reactant (b) added over an extended period. Suitable temperatures are typically between 100° and 300°C, the exact temperature being determined by the nature of the selected reactants. Examples of the preparation of products according to the use of this invention are found in US 4,394,135, and EP 147,240, to which further attention is directed.

The degree of acylation of polyamine (a) is generally dictated by the number of primary and/or secondary nitrogens present within the polyamine, i.e. the number of possible acylation sites, the proportions in which reactants (a) and (b) are mixed, and the time allowed for reaction. In accordance with the invention, the product is formed by the complete acylation of the polyamine by the carboxylic acylating agent. Within this specification, the term 'full' acylation is used to defined reactions where every amino-group on the polyamine has undergone a condensation reaction upon addition of acylating agent (b). Thus, under "full" acrylation each polyamine amino group will react to evolve one equivalent of water, irrespective of the exact nature of the condensation reaction which occurs with the acylating agent (b).

In preferred embodiment of the first, second and third aspects, the polyamine reactant is a terminal N-substituted or terminal N,N'-disubstituted polyamine of the formula (III) where A, B and C are each alkylene groups containing up to 10, preferably at most 8, more preferably at most 6 and most preferably at most 4, carbon atoms. Thus these polyamine reactants include terminal N-substituted or terminal N,N'-disubstituted derivatives of simple diamines such as ethylene diamine, propylene diamine, butylene diamine and pentylene diamine, and terminal N-substituted or terminal N,N'-disubstituted derivatives of polyalkylene polyamines such as diethylene triamine, triethylene diamine, tetraethylene pentamine, pentaethylene hexamine, di(methylethylene)triamine, dibutylene triamine, tributylene tetramine and dipentylene hexamine.

In a more highly preferred embodiment of the first, second and third aspects of the invention, $R^1$ and $R^2$ of the polyamine reactant each independently represent hydrogen or an aliphatic hydrocarbyl group.

This aliphatic hydrocarbyl group is preferably a straight or branched chain alkyl, oxyalkyl or hydroxyalkyl group. Most preferably, it is a hydroxyalkyl group, for example a 2-hydroxyethyl group.

Particularly preferred amines according the first, second and third aspects of those in which one of $R^1$ and $R^2$ is hydrogen. Also advantageously, the sum of x and y in the polyamine is not more than 8, preferably not more than 6, more preferably not more than 4 and most preferably not more than 2.

The alkylene groups substituting A, B and C may optionally be substituted by one or more hydrocarbyl groups as hereinbefore described. In a more highly preferred embodiment A, B and C are alkylene groups containing 1 to 3 carbon atoms, optionally substituted by one or more alkyl, alkenyl, alkoxyl or hydroxyalkyl groups with hydroxyalkyl groups being most preferred.

The polyamine reactant may comprise a mixture of polyamines, each component being a polyamine having the aforesaid general formula. Of such mixtures, those comprising terminal N-substituted or terminal N,N'-disubstituted alkylene diamines, and terminal N-substituted or terminal N,N'-disubstituted polyalkylene polyamines are preferred, such amines being optionally substituted by one or more hydrocarbyl groups. More preferred are mixtures comprising alkylene diamines and polyalkylene polyamines wherein said alkylene groups contain 1-3 carbon atoms, optionally substituted by one or more alkyl, alkenyl, alkoxy or hydroxyalkyl groups.

The polyamine reactant may also comprise a mixture of polyamines of the formula (I) in combination with a mixture

of polyamines of the formula (III), where a polyamine of the formula (I) is represented by

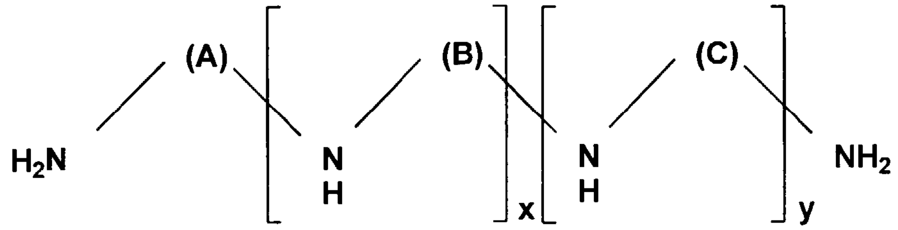

(I)

wherein A, B and C are as defined above and each represents a hydrocarbyl group, and x and y are integers whose sum is in the range from 0 to 10.

Preferably, in (I) the sum of x and y is in the range from 1 to 10. More advantageously, the sum of x and y is not more than 8, preferably not more than 6, more preferably not more than 4 and most preferably not more than 2.

In a more preferred embodiment of (I), the polyamine is an alkylene diamine or polyalkylene polyamine of the above formula where A, B and C are each alkylene groups containing up to 10, preferably at most 8, more preferably at most 6 and most preferably at most 4 carbon atoms. Thus the preferred polyamine (I) reactants include simple diamines for example ethylene diamine, propylene diamine, butylene diamine and pentylene diamine; polyalkylene polyamines for example diethylene triamine, triethylene diamine, tetraethylene pentamine, pentaethylene hexamine, di(methylethylene)triamine, dibutylene triamine, tributylene tetramine and dipentylene hexamine.

The polyamine reactant (I) may comprise a mixture of polyamines, each component being a polyamine having the aforesaid general formula (I). Of such mixtures, those comprising alkylene diamines and polyalkylene polyamines are preferred, such amines being optionally substituted by one or more hydrocarbyl groups. More preferred are mixtures comprising alkylene diamines and polyalkylene polyamines wherein said alkylene groups contain 1-3 carbon atoms.

The organic liquids of the second and third aspects of the invention are liquid hydrocarbon fuels, for example petroleum-derived fuels such as gasoline, kerosene, or distillate fuel oil. Of such fuels, distillate fuel oils, especially middle distillate fuel oils, are preferred.

Such middle distillate fuel oils generally boil within the range of from 110°C to 500°C, e.g. 150° to 400°C. The fuel oil may comprise atmospheric distillate or vacuum distillate, or cracked gas oil or a blend in any proportion of straight run and thermally and/or catalytically cracked distillates. The most common middle distillate fuels are jet fuels, diesel fuels, heating oils and heavy fuel oils. The heating oil may be straight atmospheric distillate, or it may contain minor amounts, e.g. up to 35 wt%, or vacuum gas oil or cracked gas oils or of both.

Vegetable-based fuel oils are also suitable, for example rape seed oil or ester derivatives of rape seed oil, especially rape seed oil methyl and ethyl esters. Such vegetable-based fuels are preferably used alone or blended with petroleum-derived fuel oils. Similarly, blends of oxygenates such as alcohols, diols and/or ethers with petroleum-derived fuel oils may be advantageously used.

The liquid hydrocarbon fuels preferred in accordance with the second and third aspects of the invention may further contain any of the additives customarily present in such liquids, or known from the literature. For example, where the fuel is a gasoline fuel, it may contain anti-knock additives such as tetraetliyl lead or cyclopentadienyl-manganese tricarbonyl compounds, or derivatives. Further, the gasoline may contain one or more dispersant or detergent additives, for example the hydrocarbyl-substituted amines well-known in the art. Other additives commonly present include plasticiser esters, for example adipates and mixtures thereof, scavengers, anti-oxidants, ignition improvers, metal deactivators, metallic salts useful as valve recession inhibitors, for example sodium salts of alkyl benzene sulphonic acids, and oxygenates such as alcohols and ethers.

Where the fuel is a middle distillate fuel oil, the fuel may contain one or more low temperature flow-improving additives known in the art.

The one or more aforementioned low temperature flow improving additives may be selected from the group comprising:

(i) a comb polymer,

(ii) a polyoxyalkylene ester, ether, ester/ether or a mixture thereof,

(iii) an ethylene/unsaturated ester copolymer,

(iv) a polar, organic, nitrogen-containing wax crystal growth inhibitor,

(v) a hydrocarbon polymer,

(vi) sulphur carboxy compounds, and

(vii) hydrocarbylated aromatics.

Such low temperature flow improvers will now be discussed in more detail.

(i) **Comb Polymers**

Comb polymers are polymers in which hydrocarbyl groups are pendant from a polymer backbone and are discussed in "Comb-Like Polymers. Structure and Properties", N. A. Platé and V. P. Shibaev, J. Poly. Sci. Macromolecular Revs., 8, p 117 to 253 (1974).

Advantageously, the comb polymer is a homopolymer having side chains containing at least 6, and preferably at least 10, carbon atoms or a copolymer having at least 25 and preferably at least 40, more preferably at least 50, molar per cent of the units having side chains containing at least 6, and preferably at least 10, carbon atoms.

As examples of preferred comb polymers there may be mentioned those of the general formula

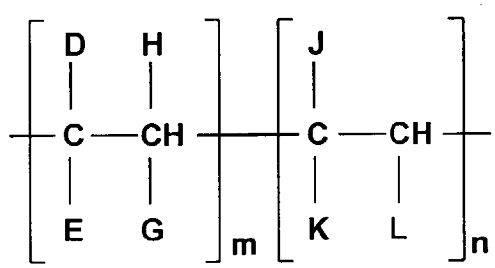

where

D = $R^{11}$, $COOR^{11}$, $OCOR^{11}$, $R^{12}COOR^{11}$ or $OR^{11}$
E = H, $CH_3$, D or $R^{12}$
G = H or D
J = H, $R^{12}$, $R^{12}COOR^{11}$, or an aryl or heterocyclic group
K = H, $COOR^{12}$, $OCOR^{12}$, $OR^{12}$, or COOH
L = H, $R^{12}$, $COOR^{12}$, $OCOR^{12}$, or aryl
$R^{11} \geq$ $C_{10}$ hydrocarbyl
$R^{12} \geq$ $C_1$ hydrocarbyl

and m and n represent mole ratios, m being within the range of from 1.0 to 0.4, n being in the range of from 0 0.6. $R^{11}$ advantageously represents a hydrocarbyl group with from 10 to 30 carbon atoms, while $R^{12}$ advantageously represents a hydrocarbyl group with from 1 to 30 carbon atoms.

The comb polymer may contain units derived from other monomers if desired or required. It is within the scope of the invention to include two or more different comb copolymers.

These comb polymers may be copolymers of maleic anhydride or fumaric acid and another ethylenically unsaturated monomer, e.g. an α-olefin or an unsaturated ester, for example, vinyl acetate. It is preferred but not essential that equimolar amounts of the comonomers be used although molar proportions in the range of 2 to 1 and 1 to 2 are suitable. Examples of olefins that may be copolymerized with e.g. maleic anhydride, include 1-decene, 1-dodecene, 1-tetradecene, 1-hexadecene, and 1-octadecene.

The copolymer may be esterified by any suitable technique and although preferred it is not essential that the maleic anhydride or fumaric acid be at least 50% esterified. Examples of alcohols which may be used include n-decan-1-ol, n-dodecan-1-ol, n-tetradecan-1-ol, n-hexadecan-1-ol, and n-octadecan-1-ol. The alcohols may also include up to one methyl branch per chain, for example, 1-methylpentadecan-1-ol, 2-methyltridecan-1-ol. The alcohol may be a mixture of normal and single methyl branched alcohols. It is preferred to use pure alcohols rather than the commercially available alcohol mixtures but if mixtures are used the $R^{12}$ refers to the average number of carbon atoms in the alkyl group; if alcohols that contain a branch at the 1 or 2 positions are used $R^{12}$ refers to the straight chain backbone segment of the alcohol.

These comb polymers may especially be fumarate or itaconate polymers and copolymers such for example as those described in European Patent Applications 153176, 153177 and 225688, and WO 91/16407.

Particularly preferred fumarate comb polymers are copolymers of alkyl fumarates and vinyl acetate, in which the alkyl groups have from 12 to 20 carbon atoms, more especially polymers in which the alkyl groups have 14 carbon atoms or in which the alkyl groups are a mixture of $C_{14}/C_{16}$ alkyl groups, made, for example, by solution copolymerising an equimolar mixture of fumaric acid and vinyl acetate and reacting the resulting copolymer with the alcohol or mixture of alcohols, which are preferably straight chain alcohols. When the mixture is used it is advantageously a 1:1 by weight mixture of normal $C_{14}$ and $C_{16}$ alcohols. Furthermore, mixtures of the $C_{14}$ ester with the mixed $C_{14}/C_{16}$ ester may advantageously be used. In such mixtures, the ratio of $C_{14}$ to $C_{14}/C_{16}$ is advantageously in the range of from 1:1 to 4:1, preferably 2:1 to 7:2, and most preferably about 3:1, by weight. The particularly preferred fumarate comb polymers may, for example, have a number average molecular weight in the range of 1,000 to 100,000, preferably 1,000 to 30,000, as measured by Vapour Phase Osmometry (VPO).

Other suitable comb polymers are the polymers and copolymers of α-olefins and esterified copolymers of styrene and maleic anhydride, and esterified copolymers of styrene and fumaric acid; mixtures of two or more comb polymers may be used in accordance with the invention and, as indicated above, such use may be advantageous.

(ii) **Polyoxyalkylene Compounds**

Examples are polyoxyalkylene esters, ethers, ester/ethers and mixtures thereof, particularly those containing at least one, preferably at least two $C_{10}$ to $C_{30}$ linear saturated alkyl groups and a polyoxyalkylene glycol group of molecular weight up to 5,000 preferably 200 to 5,000, the alkyl group in said polyoxyalkylene glycol containing from 1 to 4 carbon atoms. These materials form the subject of European Patent Publication 0 061 895 A2. Other such additives are described in United States Patent 4 491 455.

The preferred esters, ethers or ester/ethers which may be used may be structurally depicted by the formula

$$R^3\text{-0(A)-0-}R^4$$

where $R^3$ and $R^4$ are the same or different and may be

(a) n-alkyl

(b)

$$\text{n-alkyl-}\overset{O}{\overset{\|}{C}}$$

(c)

$$\text{n-alkyl-O-}\overset{O}{\overset{\|}{C}}\text{-}(CH_2)_n\text{—}$$

(d)

$$\text{n-alkyl-O-}\overset{O}{\overset{\|}{C}}\text{-}(CH_2)_n\text{-}\overset{O}{\overset{\|}{C}}\text{-}$$

n being, for example, 1 to 30, the alkyl group being linear and saturated and containing 10 to 30 carbon atoms, and A represents the polyalkylene segment of the glycol in which the alkylene group has 1 to 4 carbon atoms, such as polyoxymethylene, polyoxyethylene or polyoxytrimethylene moiety which is substantially linear; some degree of branching with lower alkyl side chains (such as in polyoxypropylene glycol) may be tolerated but it is preferred that the glycol should be substantially linear. A may also contain nitrogen.

Examples of suitable glycols are substantially linear polyethylene glycols (PEG) and polypropylene glycols (PPG) having a molecular weight of about 100 to 5,000, preferably about 200 to 2,000. Esters are preferred and fatty acids containing from 10-30 carbon atoms are useful for reacting with the glycols to form the ester additives, it being preferred to use a $C_{18}$-$C_{24}$ fatty acid, especially behenic acid. The esters may also be prepared by esterifying polyethoxylated fatty acids or polyethoxylated alcohols.

Polyoxyalkylene diesters, diethers, ether/esters and mixtures thereof are suitable as additives, diesters being preferred for use in narrow boiling distillates when minor amounts of monoethers and monoesters (which are often formed in the manufacturing process) may also be present. It is important for additive performance that a major amount of the dialkyl compound is present. In particular, stearic or behenic diesters of polyethylene glycol, polypropylene glycol or polyethylene/polypropylene glycol mixtures are preferred.

Other examples of polyoxyalkylene compounds are those described in Japanese Patent Publication Nos 2-51477 and 3-34790 (both Sanyo), and the esterified alkoxylated amines described in EP-A-117,108 and EP-A-326,356 (both Nippon Oil and Fats).

(iii) **Ethylene/Unsaturated Ester Copolymers**

Ethylene copolymer flow improvers have a polymethylene backbone divided into segments by oxyhydrocarbon side chains, i.e. ethylene unsaturated ester copolymer flow improvers. The unsaturated monomers copolymerisable with ethylene to form the copolymers include unsaturated mono and diesters of the general formula:

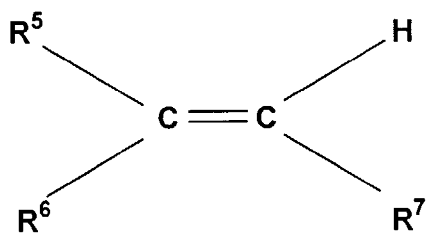

wherein $R^5$ represents hydrogen or a methyl group;

$R^6$ represents a -OOC$R^8$ or -COO$R^8$ group wherein $R^8$ represents hydrogen or a $C_1$ to $C_{28}$, preferably $C_1$ to $C_{16}$, more preferably a $C_1$ to $C_8$, straight or branched chain alkyl group, provided that $R^8$ does not represent hydrogen when $R^6$ represents -COO$R^8$; and

$R^7$ is hydrogen or -COO$R^8$.

The monomer, when $R^6$ and $R^7$ are hydrogen and $R^5$ is -OOC$R^8$, includes vinyl alcohol esters of $C_1$ to $C_{29}$, preferably $C_1$ to $C_5$, monocarboxylic acids, and preferably $C_2$ to $C_{29}$, more preferably $C_1$ to $C_5$ monocarboxylic acids, most preferably $C_2$ to $C_5$ monocarboxylic acids. Examples of vinyl esters which may be copolymerised with ethylene include vinyl acetate, vinyl propionate and vinyl butyrate or isobutyrate, vinyl acetate and vinyl propionate being preferred. Preferably, the copolymers contain from 5 to 40 wt % of the vinyl ester, more preferably from 10 to 35 wt % vinyl ester [change to molar]. They may also be in the form of mixtures of two copolymers such as those described in US Patent 3,961,916. Preferably, number average molecular weight, as measured by vapour phase osmometry, of the copolymer is 1,000 to 10,000, more preferably 1,000 to 5,000. If desired, the copolymers may be derived from additional comonomers, e.g. they may be terpolymers or tetrapolymers or higher polymers, for example where the additional comonomer is isobutylene or dissobutylene.

Such copolymers may also be made by transesterification, or by hydrolysis and re-esterification, of an ethylene unsaturated ester copolymer to give a different ethylene unsaturated ester copolymer. For example, ethylene vinyl hexanoate and ethylene vinyl octanoate copolymers may be made in this way, e.g. from an ethylene vinyl acetate copolymer.

(iv) **Polar Organic, Nitrogen-containing Compounds**

The oil-soluble polar nitrogen compound is either ionic or non-ionic and is capable of acting as a wax crystal growth inhibitor in fuels. It comprises for example one or more of the compounds (a) to (c) as follows:

(a) An amine salt and/or amide formed by reacting at least one molar proportion of a hydrocarbyl substituted amine with a molar proportion of a hydrocarbyl acid having 1 to 4 carboxylic acid groups or its anhydride.

Ester/amides may be used containing 30 to 300, preferably 50 to 150 total carbon atoms. These nitrogen compounds are described in US Patent 4 211 534. Suitable amines are usually long chain $C_{12}$-$C_{40}$ primary, secondary, tertiary or quaternary amines or mixtures thereof but shorter chain amines may be used provided the resulting nitrogen compound is oil soluble and therefore normally contains about 30 to 300 total carbon atoms. The nitrogen compound preferably contains at least one straight chain $C_8$ to $C_{40}$, preferably $C_{14}$ to $C_{24}$ alkyl segment.

Suitable amines include primary, secondary, tertiary or quaternary, but preferably are secondary. Tertiary and quaternary amines can only form amine salts. Examples of amines include tetradecyl amine, cocoamine, and hydrogenated tallow amine. Examples of secondary amines include dioctacedyl amine and methyl-behenyl amine. Amine mixtures are also suitable such as those derived from natural materials. A preferred amine is a secondary hydrogenated tallow amine of the formula $HNR^9R^{10}$ wherein $R^9$ and $R^{10}$ are alkyl groups derived from hydrogenated tallow fat composed of approximately 4% $C_{14}$, 31% $C_{16}$, 59% $C_{18}$.

Examples of suitable carboxylic acids and their anhydrides for preparing the nitrogen compounds include cyclohexane, 1,2 dicarboxylic acid, cyclohexene 1,2 dicarboxylic acid, cyclopentane 1,2 dicarboxylic acid and naphthalene dicarboxylic acid, and 1,4-dicarboxylic acids including dialkyl spirobislactone. Generally, these acids have about 5-13 carbon atoms in the cyclic moiety. Preferred acids useful in the present invention are benzene dicarboxylic acids such as phthalic acid, isophthalic acid, and terephthalic acid. Phthalic acid or its anhydride is particularly preferred. The particularly preferred compound is the amide-amine salt formed by reacting 1 molar portion of phthalic anhydride with 2 molar portions of dihydrogenated tallow amine. Another preferred compound is the diamide formed by dehydrating this amide-amine salt.

Other examples are long chain alkyl or alkylene substituted dicarboxylic acid derivatives such as amine salts of monoamides of substituted succinic acids, examples of which are known in the art and described in US-A 4,147,520, for example. Suitable amines may be those described above.

Other examples are condensates such as described in EP-A-327,423.

(b) A chemical compound comprising or including a cyclic ring system, the compound carrying at least two substituents of the general formula (I) below on the ring system

$$-A-NR^{13}R^{14} \qquad (I)$$

where A is an aliphatic hydrocarbyl group that is optionally interrupted by one or more hetero atoms and that is straight chain or branched, and $R^{13}$ and $R^{14}$ are the same or different and each is independently a hydrocarbyl group containing 9 to 40 carbon atoms optionally interrupted by one or more hetero atoms, the substituents being the same or different and the compound optionally being in the form of a salt thereof;

Preferably, A has from 1 to 20 carbon atoms and is preferably a methylene or polymethylene group.

Examples of substituted hydrocarbyl groups include 2-hdroxyethyl, 3-hydroxypropyl, 4-hydroxybutyl, 2-ketopropyl, ethoxyethyl, and propoxypropyl. The groups may also or alternatively contain atoms other than carbon in a chain or ring otherwise composed of carbon atoms. Suitable hetero atoms include, for example, nitrogen, sulphur, and, preferably, oxygen.

The cyclic ring system may include homocyclic, heterocyclic, or fused polycyclic assemblies, or a system where two or more such cyclic assemblies are joined to one another and in which the cyclic assemblies may be the same or different. Where there are two or more such cyclic assemblies, the substituents of the general formula (I) may be on the same or different assemblies, preferably on the same assembly. Preferably, the or each cyclic assembly is aromatic, more preferably a benzene ring. Most preferably, the cyclic ring system is a single benzene ring when it is preferred that the substituents are in the ortho or meta positions, which benzene ring may be optionally further substituted.

The ring atoms in the cyclic assembly or assemblies are preferably carbon atoms but may for example include one or more ring N, S or O atom, in which case or cases the compound is a heterocyclic compound.

Examples of such polycyclic assemblies include

(i) condensed benzene structures such as naphthalene, anthracene, phenanthrene, and pyrene;

(ii) condensed ring structures where none of or not all of the rings are benzene such as azulene, indene, hydroindene, fluorene, and diphenylene oxide;

(iii) rings joined "end-on" such as diphenyl;

(iv) heterocyclic compounds such as quinoline, indole, 2:3 dihydroindole, benzofuran, coumarin, isocoumarin, benzothiophen, carbazole and thiodiphenylamine;

(v) non-aromatic or partially saturated ring systems such as decalin (i.e. decahydronaphthalene), α-pinene, cardinene, and bornylene; and

(vi) three-dimensional structures such as norbornene, bicycloheptane (i.e. norbornane), bicyclooctane, and bicyclooctene.

Each hydrocarbyl group constituting $R^{13}$ and $R^{14}$ in the invention (Formula I) may for example be an alkyl or alkylene group or a mono- or poly-alkoxyalkyl group. Preferably, each hydrocarbyl group is a straight chain alkyl group. The number of carbon atoms in each hydrocarbyl group is preferably 16 to 40, more preferably 16 to 24.

Also, it is preferred that the cyclic system is substituted with two only substituents of the general formula (I) and that A is a methylene group.

Examples of salts of the chemical compounds are the acetate and the hydrochloride.

The compounds may conveniently be made by reducing the corresponding amide which may be made by reacting a secondary amine with the appropriate acid chloride; and

(c) A condensate of long chain primary or secondary amine with a carboxylic acid-containing polymer.

Specific examples include polymers such as described in GB-A-2,121,807, FR-A-2,592,387 and DE-A-3,941,561; and also esters of telemer acid and alkanoloamines such as described in US-A-4,639,256; a long chain epoxide/amine reaction product which may optionally be further related with a polycarboxylic acid; and the reaction product of an amine containing a branched carboxylic acid ester, an epoxide and a mono-carboxylic acid polyester such as described in US-A-4,631,071.

(v) **Hydrocarbon Polymers**

Examples are those represented by the following general formula

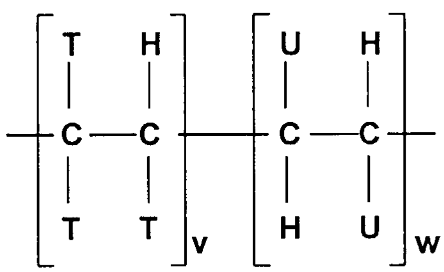

where

T = H or $R^{15}$
U = H, T or aryl
$R^{15}$ = $C_1$-$C_{30}$ hydrocarbyl

and v and w represent mole ratios, v being within the range 1.0 to 0.0, w being within the range 0.0 to 1.0.

These polymers may be made directly from ethylenically unsaturated monomers or indirectly by hydrogenating

the polymer made from monomers such as isoprene, butadiene.

Preferred hydrocarbon polymers are copolymers of ethylene and at least one α-olefin, having a number average molecular weight of at least 30,000. Preferably the α-olefin has at most 20 carbon atoms. Examples of such olefins are propylene, 1-butene, isobutene, n-octene-1, isooctene-1, n-decene-1, and n-dodecene-1. The copolymer may also comprise small amounts, e.g. up to 10% by weight of other copolymerizable monomers, for example olefins other than α-olefins, and non-conjugated dienes. The preferred copolymer is an ethylene-propylene copolymer. It is within the scope of the invention to include two or more different ethylene-α-olefin copolymers of this type.

The number average molecular weight of the ethylene-α-olefin copolymer is, as indicated above, at least 30,000, as measured by gel permeation chromatography (GPC) relative to polystyrene standards, advantageously at least 60,000 and preferably at least 80,000. Functionally no upper limit arises but difficulties of mixing result from increased viscosity at molecular weights above about 150,000, and preferred molecular weight ranges are from 60,000 and 80,000 to 120,000.

Advantageously, the copolymer has a molar ethylene content between 50 and 85 per cent. More advantageously, the ethylene content is within the range of from 57 to 80%, and preferably it is in the range from 58 to 73%; more preferably from 62 to 71 %, and most preferably 65 to 70%.

Preferred ethylene-α-olefin copolymers are ethylene-propylene copolymers with a molar ethylene content of from 62 to 71 % and a number average molecular weight in the range 60,000 to 120,000, especially preferred copolymers are ethylene-propylene copolymers with an ethylene content of from 62 to 71% and a molecular weight from 80,000 to 100,000.

The copolymers may be prepared by any of the methods known in the art, for example using a Ziegier type catalyst. Advantageously, the polymers are substantially amorphous, since highly crystalline polymers are relatively insoluble in fuel oil at low temperatures.

The additive composition may also comprise a further ethylene-α-olefin copolymer, advantageously with a number average molecular weight of at most 7500, advantageously from 1,000 to 6,000, and preferably from 2,000 to 5,000, as measured by vapour phase osmometry. Appropriate α-olefins are as given above, or styrene, with propylene again being preferred. Advantageously the ethylene content is from 60 to 77 molar per cent although for ethylene-propylene copolymers up to 86 molar per cent by weight ethylene may be employed with advantage.

Examples of hydrocarbon polymers are described in WO-A-9 111 488.

(vi) **Sulphur Carboxy Compounds**

Examples are those described in EP-A-0,261,957 which describes the use of compounds of the general formula

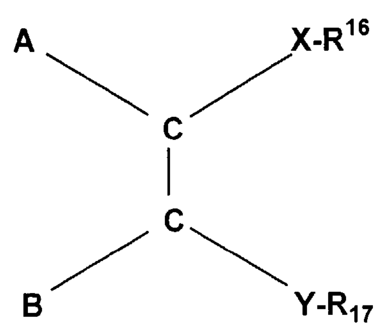

in which

- $Y\text{-}R^{17}$ is $SO_3(-)(+)\ NR_3^{18}\ R^{17}$, $-SO_3(-)(+)HNR_2^{18}\ R^{17}$,
- $SO_3(-)(+)H_2NR^{18}R^{17}$, $-SO_3(-)(+)H_3NR^{17}$,
- $SO_2NR^{18}R^{17}$ or $-SO_3R^{17}$;
- $X\text{-}R^{16}$ is $-Y\text{-}R^{17}$ or $-CONR^{18}R^{16}$,
- $CO_2(-)(+)NR_3^{18}\ R^{16}$, $-CO_2(-)(+)HNR_2^{18}\ R^{16}$,
- $R^{19}\text{-}COOR^{16}$, $-NR^{18}COR^{16}$,
- $R^{19}OR^{16}$, $-R^{19}OCOR^{16}$, $-R^{19},R^{16}$,
- $N(COR^{18})R^{16}$ or $Z(-)(+)NR_3^{18}\ R^{16}$;

- $z^{(-)}$ is $SO_3^{(-)}$ or $-CO_2^{(-)}$;

$R^{16}$ and $R^{17}$ are alkyl, alkoxyalkyl or polyalkoxyalkyl containing at least 10 carbon atoms in the main chain;

$R^{18}$ is hydrocarbyl and each $R^{18}$ may be the same or different and $R^{19}$ is absent or is $C_1$ to $C_5$ alkylene and in

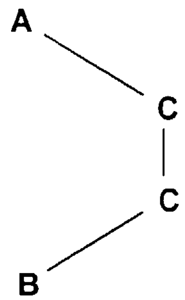

the carbon-carbon (C-C) bond is either a) ethylenically unsaturated when A and B may be alkyl, alkenyl or substituted hydrocarbyl groups or b) part of a cyclic structure which may be aromatic, polynuclear aromatic or cycloaliphatic, it is preferred that $X-R^{16}$ and $Y-R^{17}$ between them contain at least three alkyl, alkoxyalkyl or polyalkoxyalkyl groups.

(vii) **Hydrocarbylated Aromatics**

These materials are condensates comprising aromatic and hydrocarbyl parts. The aromatic part is conveniently an aromatic hydrocarbon which may be unsubstituted or substituted with, for example, non-hydrocarbon substituents. Such aromatic hydrocarbon preferably contains a maximum of these substituent groups and/or three condensed rings, and is preferably naphthalene. The hydrocarbyl part is a hydrogen and carbon containing part connected to the rest of the molecule by a carbon atom. It may be saturated or unsaturated, and straight or branched, and may contain one or more hetero-atoms provided they do not substantially affect the hydrocarbyl nature of the part. Preferably the hydrocarbyl part is an alkyl part, conveniently having more than 8 carbon atoms. The molecular weight of such condensates may, for example, be in the range of 2,000 to 200,000 such as 2,000 to 20,000, preferably 2,000 to 8,000. Examples are known in the art, primarily as lube oil pour depressants and as dewaxing aids as mentioned hereinbefore, they may, for example, be made by condensing a halogenated wax with an aromatic hydrocarbon. More specifically, the condensation may be a Friedel-Crafts condensation where the halogenated wax contains 15 to 60, e.g. 16 to 50, carbon atoms, has a melting point of about 200 to 400°C and has been chlorinated to 5 to 25 wt% chlorine, e.g. 10 to 18 wt%. Another way of making similar condensates may be from olefins and the aromatic hydrocarbons.

Multicomponent additive systems may be used and the ratios of additives to be used will depend on the fuel to be treated.

Middle distillate fuel oils may contain one or more other additives. Particularly noteworthy additives are the ashless dispersants which are described in numerous patent specifications, such as EP-A-0 482 253. Further examples include macrocyclic ashless dispersants, cetane improvers, polymers of monoolefins, metallic-based combustion improvers such as ferrocene, corrosion inhibitors, anti-oxidants, reodorants, and antiwear additives.

In accordance with all use and liquid composition aspects, the quantity of reaction product in the liquid is usually in excess of 0.00005% (weight of additive per weight of organic liquid).

The maximum quantity employed does not appear to be critical, appearing in practice to be governed by economics and choice. However, particularly suitable quantities lie in the range of 0.00005% to 5.0% weight of product per weight of organic liquid. More preferably, the product may be employed in the range 0.0001 % to 0.5%, more preferably still 0.0005% to 0.1%, and most preferably 0.0005% to 0.01 % weight per weight of fuel.

The reaction products may be introduced into the organic liquids in the form of a concentrate. In such a concentrate, the product(s) may be dissolved in a solvent at a concentration within wide limits according to the needs and restrictions of the specific application, for example from 1:90, such as 10:80, per cent (weight:weight). Examples of suitable solvents are hydrocarbons or oxygen-containing hydrocarbons such as kerosene, aromatic naphthas, and mineral lubricating oils. Optionally, co-additives such as those earlier described may be present, depending upon the organic liquid to be treated and the demands of each circumstance.

The various aspects of the invention will now be illustrated by way of example only as follows.

## EXAMPLES OF REACTION PRODUCTS

### Example 1

Oleic acid (282 g; 1.0 moles) was dissolved in toluene (250 mls). Diethylene triamine (DETA) (34.3 g; 0.33 moles) was dissolved in toluene (100 mls), the slight stoichiometric excess of oleic acid being used to ensure subsequent acylation of every amino group. The amine solution was added slowly to the stirred solution of the acid over one hour. During this addition there was an exotherm and the reaction temperature increased by 13°C. When the addition of the amine was complete, the reaction mixture was heated to reflux for 7 hours and 45 minutes. During the reflux water (17 mls; theory = 18 mls) was collected in a Dean & Stark trap. At the end of the reflux the toluene was removed by distilling the reaction mixture to a pot temperature of 150°C. Final traces of solvent were removed from the product by applying a vacuum of 500 mm Hg.

The product obtained was a waxy solid. The IR spectrum of the product showed no trace of oleic acid (peak at 1711 wavenumbers). There were, however, peaks at 1.665 and 1590 wavenumbers consistent with the formation of secondary and tertiary amide groups, i.e. that acylation had been essentially full.

### Examples 12 to 14

Reaction conditions analogous to those used for the synthesis of Example 1 were employed to generate products according to the invention, as illustrated in Table III below

**Table III**

| Example No | Reactants | |
|---|---|---|
| | (a) polyamine | (b) monocarboxylic acylating agent |
| 12 | 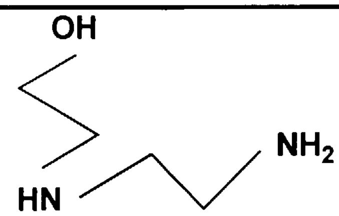 | coco fatty acid |
| 13 | - " - | cekanoic acid |
| 14 | - " - | stearic acid |

In each example, one mole of polyamine was reacted with slightly in excess of two moles of acylating agent.

### Examples of Use and Liquid Composition Aspects

Examples 12-14 were tested for their effects on the foaming tendencies of organic liquids.

In the following Experiments the procedure used to assess foaming tendency involved the hand-shaking of 100 ml of test liquid in a previously cleaned and dried 4 oz bottle, the bottle then being placed in normal attitude on a stationary, flat surface. The subsequent length of time (in seconds) over which the foam generated by shaking collapsed sufficiently to reveal a clear area of liquid surface was recorded as a measure of foaming tendency, longer foam collapse times indicating greater foam stability.

### Experiment A

For the purposes of this experiment, two conventional European diesel fuels showing a pronounced tendency to foam were selected as suitable organic liquids. Each diesel fuel possessed the following characteristics:

**Diesel Fuel V**

| Test Description | Method/Designation | Result |
|---|---|---|
| PAAR Density | D4052/IP365 | 0.8399 |
| KV 40C | D445/IP71 | 2.825 |
| Cloud Point | IP219/D2500 (auto) | -6°C |
| Pour Point | D97/IP15 | -27°C |
| Sulphur % wt | XRF RD/86/10 | 0.20 |

| Distillation: | Vol % Off | Temp. °C |
|---|---|---|
| by D86/IP123 method | IBP | 148 |
| | 5 | 194 |
| | 10 | 209 |
| | 20 | 229 |
| | 30 | 248 |
| | 40 | 263 |
| | 50 | 275 |
| | 60 | 286 |
| | 70 | 298 |
| | 80 | 312 |
| | 90 | 331 |
| | 95 | 345 |
| | FBP | 367 |

**Diesel Fuel W**

A conventional European diesel fuel of similar characteristics to fuel V.

Previously-exemplified reaction products were added to samples of each test fuel, foam collapse times after 30 seconds of shaking being measured in accordance with the prescribed method and shown in Table IV below.

Table IV

| Additive Example No | Foam Collapse Time (s) of Test Fuel @ given additive treat-rate | | | |
|---|---|---|---|---|
| | 0 | 0.001% (w/w) | 0.002% (w/w) | 0.003%(w/w) |
| Base Fuel V | 32 | - | - | - |
| W | 53 | - | - | - |
| 12 | | 26 | - | 10 |
| | | - | - | - |
| 14 | | 24 | - | 17 |
| | | - | - | - |

For each reaction product, the first figure in a given column indicates foam collapse time in diesel fuel V, the second figure the time in diesel fuel W. All figures are the average of two tests. The character '-' indicates an untested combination of fuel and reaction product.

The additives of this invention are thus effective as inhibitors of the foaming tendencies of organic liquids, particularly petroleum fuels. In addition, their silicon-free composition precludes the formation and emission of particles of silicon oxides upon combustion; moreover, the absence of other ash-producing elements ensures that their contribution to particulate emissions will be negligible.

**Claims**

1. A fully-acylated product of reaction between:

(a) a polyamine of the formula (III)

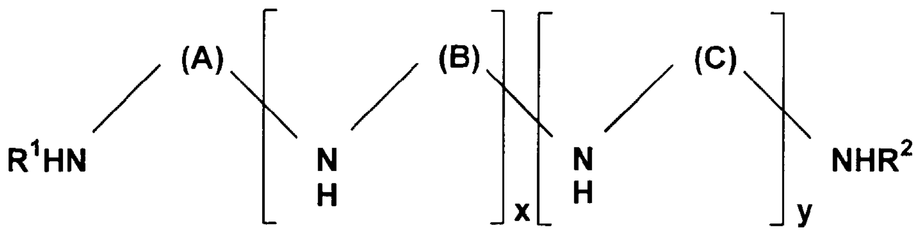

(III)

wherein A, B and C may be the same or different and each represents a hydrocarbyl group, and x and y are integers whose sum is in the range from 0 to 10, and wherein $R^1$ and $R^2$ may be the same or different and each represents hydrogen or a hydrocarbyl group, provided that both $R^1$ and $R^2$ are not hydrogen, and

(b) a monocarboxylic acylating agent of the formula (II)

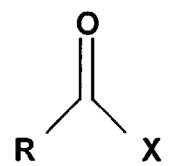

(II)

wherein R represents a hydrocarbyl group, and X represents a leaving group.

2. The product according to claim 1 wherein $R^1$ and $R^2$ each independently represent hydrogen or an aliphatic hydrocarbyl group.

3. The product according to claim 2 wherein the aliphatic hydrocarbyl group is a straight or branched chain alkyl, oxyalkyl or hydroxyalkyl group.

4. A liquid composition comprising a major proportion of an organic liquid, and a minor proportion of an additive comprising the product of any of claims 1 to 3.

5. The use, for suppression of inhibition of the foaming tendencies of an organic liquid, of the product of any of claims 1 to 3.